# EUROPÄISCHE PATENTSCHRIFT

(11) **EP 2 862 708 B1**
(45) Veröffentlichungstag und Bekanntmachung des Hinweises auf die Patenterteilung: **27.04.2016**
(21) Anmeldenummer: 13189354.7
(22) Anmeldetag: 18.10.2013
(51) Int. Cl.: B32B 5/06, B32B 5/26, B32B 3/30, D04H 1/492, D04H 1/495, D04H 5/03, A61F 13/62

(54) **Schlaufenbildendes Verschlusselement für Klettverschlüsse sowie Verfahren zur Herstellung eines Verschlusselementes**
Loop-forming closure element for Velcro elements and method for producing a closure element
Élément de fermeture formant une boucle pour fermetures à crochet et procédé de fabrication d'un élément de fermeture

(43) Veröffentlichungstag der Anmeldung: 22.04.2015
(73) Patentinhaber: Mondi Gronau GmbH, 48599 Gronau (DE)
(72) Erfinder: Baldauf, Georg, 48366 Laer (DE); Homölle, Dieter, 48607 Ochtrup (DE)
(74) Vertreter: Lorenz, Bernd Ingo Thaddeus

(56) Entgegenhaltungen:
- EP-A2- 0 937 420
- DE-A1-102004 053 469
- DE-U1-202004 021 382

## Beschreibung

Die Erfindung betrifft ein schlaufenbildendes Verschlusselement für Klettverschlüsse gemäß dem Oberbegriff des Patentanspruches 1. Gegenstand der Erfindung ist des Weiteren ein Verfahren zur Herstellung eines solchen Verschlusselementes für Klettverschlüsse.

Das schlaufenbildende Verschlusselement ist als weiblicher Teil eines Klettverschlusses vorgesehen. Insbesondere soll das Verschlusselement als kostengünstiges Produkt für Einweg-Hygieneprodukte wie beispielsweise Windeln oder Inkontinenzeinlagen genutzt werden.

Bei der Verwendung an Windeln werden schlaufenbildende Verschlusselemente in Form von Streifen auf den vorderen Bündchenbereich der Windeln angebracht. Mit Verschlussbändern, die seitlich an den Windeln befestigt sind und an ihren freien Enden Kletthaken aufweisen, wird der Klettverschluss vervollständigt. Da die Kletthaken auf dem schlaufenbildenden Verschlusselement bei der Benutzung zu liegen kommen und dort eine Verhakung bewirken, wird das schlaufenbildende Verschlusselement auch als "Landing Zone" bezeichnet.

Klettverschlüsse können mehrfach geöffnet und verschlossen werden, ohne dass dadurch die Funktionalität des Verschlusses leidet. Im Gegensatz zu Klebeverschlüssen sind Klettverschlüsse unempfindlich gegenüber Kontakte mit Hautcremes oder Puder.

An Klettverschlüsse an Wegwerfprodukten werden mehrere Anforderungen gestellt. Zunächst soll das schlaufenbildende Verschlusselement des Klettverschlusses aus Kostengründen möglichst einfach mit möglichst wenig Material herzustellen sein. Ferner muss das schlaufenbildende Verschlusselement eine ausreichende Verhakung mit Kletthaken des zugeordneten Verschlussbandes gewährleisten. Schließlich soll das Verschlusselement auch eine ansprechende Gestaltung ermöglichen und eine angenehme Haptik aufweisen.

Aus der DE 20 2004 021 382 U1 ist ein schlaufenbildendes Verschlusselement bekannt, welches auf einer Trägerfolie ein Gewirke aufweist, wobei das Gewirke und die Trägerfolie durch ein Klebstoffmuster miteinander verbunden sind. Das Gewirke kann beispielsweise ein Flächengewicht von 18 g/m² aufweisen, so dass insgesamt eine leichte, offene Struktur erreicht wird, wobei auch ein Dekoraufdruck auf der Trägerfolie durch das Gewirke hindurch sichtbar bleibt. Durch den Auftrag von Klebstoff in einem Muster kann erreicht werden, dass an den klebstofffreien Bereichen die Schlaufen nicht verklebt und frei für Kletthaken zugänglich sind, wobei Kletthaken sogar in die Grundstruktur des Gewirkes eingreifen können. An den verklebten Abschnitten kann dagegen soviel Klebstoff vorgesehen werden, dass das Gewirke sicher befestigt ist. Es kann dabei in Kauf genommen werden, dass dort auch einzelne Schlaufen mit in den Klebstoff eingebunden werden.

Schlaufenbildende Verschlusselemente mit eingewirkten Schlaufen haben sich in der Praxis bewährt, jedoch wird die Haptik zum Teil als unangenehm wahrgenommen. Auch wenn das schlaufenbildende Verschlusselement nur in Ausnahmefällen direkt mit einem Benutzer in Kontakt kommt, ist die Hautfreundlichkeit des Materials noch für einzelne Anwendungen verbesserungswürdig.

Neben den Verschlusselementen mit eingewirkten Schlaufen sind auch Vliesstoff-Materialien bekannt, die für die Verbindung mit Kletthaken geeignete Schlaufen bilden.

Aus der EP 0 963 472 B1 ist ein schlaufenbildender Vliesstoff für Klettverschlüsse bekannt, wobei zur Erzeugung einer ausreichend festen Struktur Bikomponentenfasern eingesetzt werden. Um mehrere Bindungen zwischen Fasern zu erreichen, wird unter Heißluft eine Polymerkomponente der Bikomponentenfasern aufgeschmolzen. Das Herstellungsverfahren ist insgesamt aufwendig.

Aus der WO 03/105621 A1 ist ein Spunlaced-Nonwoven als schlaufenbildendes Verschlusselement bekannt, wobei die Schlaufen durch eine Wasserstrahlverfestigung gebildet sind. Zu dekorativen Zwecken ist der Vliesstoff mit einer Prägung versehen. Die Oberflächenbeschaffenheit sowie die Klettwirkung des bekannten Vliesstoffes sind noch verbesserungswürdig.

Ein weiteres schlaufenbildendes Verschlusselement ist aus der DE 10 2004 053 469 A1 bekannt, wobei ein Kardenvlies, also eine Schicht aus kardierten Stapelfasern, auf einem Spinnvlies angeordnet ist und wobei das so gebildete Vliesstoffmaterial mit einer Prägung versehen ist. Das Kardenvlies und Spinnvlies sind für unterschiedliche Zwecke vorgesehen. Während die kardierten Stapelfasern für eine Verbindung mit Kletthaken vorgesehen sind, ermöglichen die Endlosfasern des Spinnvlieses eine hohe Stabilität und eine Befestigung an einer Trägerschicht.

Aus der EP 0 937 420 A2 ist ein schlaufenbildendes Verschlusselement für Klettverschlüsse mit den Merkmalen des Oberbegriffs des Patentanspruches 1 bekannt, welches ein Vliesstoffmaterial mit Endlosfasern eines Spinnvlieses und kardierte Stapelfasern enthalten kann. Zur Bildung von Schlaufen wird eine mechanische Vernadelung beschrieben.

Vor diesem Hintergrund liegt der vorliegenden Erfindung die Aufgabe zugrunde, ein schlaufenbildendes Verschlusselement für Klettverschlüsse umfassend ein Vliesstoffmaterial anzugeben, welches sich durch besonders vorteilhafte mechanische Eigenschaften, eine gute Klettwirkung sowie eine besonders weiche Oberfläche auszeichnet. Des Weiteren soll ein Verfahren zur Herstellung eines solchen Verschlusselementes angegeben werden.

Gegenstand der Erfindung und Lösung der Aufgabe sind ein schlaufenbildendes Verschlusselement gemäß Patentanspruch 1 sowie ein Verfahren zu dessen Herstellung gemäß Patentanspruch 9.

Erfindungsgemäß werden die Eigenschaften der Endlosfasern sowie der Stapelfasern auf besonders vorteilhafte Weise miteinander kombiniert. Die Endlosfasern bilden eine durchgehende, stabilisierende Struktur, welche auch die Übertragung von Zugkräften innerhalb des Materials ermöglichen. Die auch als Kurzfasern bezeichneten Stapelfasern erzeugen dagegen eine besonders weiche und flauschige Struktur, wobei zumindest einige Stapelfasern an beiden Seiten der Vliesstoffschicht vorstehen.

Durch die Verschlingung und Vermischung der Endlosfasern sowie der Stapelfasern werden zunächst die Stapelfasern effektiv in dem Vliesstoffmaterial verankert. Die Endlosfasern bilden gleichsam eine Grundstruktur, in welche die Stapelfasern eingearbeitet sind.

Durch die Vermischung und Verschlingung der Fasern miteinander, die beispielsweise durch eine Beaufschlagung mit Wasserstrahlen erfolgen kann, können sowohl die Stapelfasern als auch die Endlosfasern an einer Oberfläche des Vliesstoffmaterials Schlaufen bilden, die für die Aufnahme von Kletthaken geeignet sind.

Erfindungsgemäß ist das gesamte Vliesstoffmaterial geprägt. Durch die Prägung wird zunächst die Stabilität und Festigkeit des Vliesstoffmaterials erhöht. Zwischen den geprägten Bereichen können die Stapelfasern sowie die Endlosfasern besonders stark durch Wasserstrahlen aufgebauscht werden, so dass sich die Klettwirkung verbessert. Darüber hinaus wird durch das Prägen auch die Oberfläche des Vliesstoffmaterials vergrößert, wobei gerade an dem Rand der Prägungen Kletthaken tief in das Vliesstoffmaterial eingreifen können.

Gemäß einer bevorzugten Ausgestaltung der Erfindung ist das geprägte Vliesstoffmaterial vollständig aus den Endlosfasern und den Stapelfasern gebildet, so dass das Vliesstoffmaterial dann lediglich aus einer Vliesstoffschicht aus einem Fasergemisch besteht.

Bei der Herstellung des schlaufenbildenden Verschlusselementes werden üblicherweise das Spinnvlies und die kardierten Stapelfasern als separate Schichten zugeführt und dann, beispielsweise durch Wasserstrahlen, miteinander verschlungen und gemischt. Bei einer solchen Vorgehensweise wird üblicherweise keine vollständig homogene Mischung erfolgen, so dass sich dann der Anteil der Endlosfasern zu dem Anteil der Stapelfasern über die Dicke der Vliesstoffschicht ändert, wobei die Verschlingung und Durchmischung zumindest derart erfolgt, dass an beiden Seiten der Vliesstoffschicht zumindest einzelne der kurzen Stapelfasern vorstehen. Üblicherweise wird der Anteil der Stapelfasern an der Seite des Vliesstoffmaterials größer sein, an der die Stapelfasern ursprünglich zugeführt würden. Diese Seite ist dann auch nach der Durchmischung und Verschlingung durch Wasserstrahlen weicher und vorzugsweise als freiliegende Seite des Verschlusselementes für die Verbindung mit Kletthaken vorgesehen.

Die Vliesstoffschicht ist so auszugestalten, dass diese bei üblichen Kletthaken eine ausreichende Zugfestigkeit und genügend freie Schlaufen aufweist. Andererseits wird alleine aus Kostengründen ein möglichst geringes Flächengewicht angestrebt, wobei unterhalb des Vliesstoffmaterials auch ein Dekoraufdruck vorgesehen sein kann, der dann durch die Vliesstoffschicht sichtbar sein soll. Vor diesem Hintergrund beträgt das Flächengewicht der Vliesstoffschicht vorzugsweise zwischen 20 g/m² und 50 g/m² (Gramm pro Quadratmeter). Vliesstoffe mit dem angegebenen Flächengewicht werden auch als voluminöse Vliese bezeichnet.

Um das Verschlusselement leicht an einem Hygieneprodukt wie einer Windel oder dergleichen befestigen und mit einem Dekorauftrag versehen zu können, kann das Vliesstoffmaterial mit einer Trägerfolie kaschiert sein. Die Kaschierung kann dabei durch ein Klebstoffmuster mit verklebten Abschnitten und klebstofffreien Flächen erfolgen. Geeignete Klebstoffmuster sind aus der DE 20 2004 021 382 U1 bekannt. Als Trägerfolie kann insbesondere eine einfache Folie aus Polyolefin vorgesehen sein.

Bevorzugt weist die Trägerfolie eine Dicke zwischen 10 und 40 µm auf, wobei beispielsweise eine Monofolie aus Polyethylen eingesetzt werden kann, die besonders bevorzugt vor dem Kaschieren mit dem Vliesstoffmaterial mit einem Aufdruck versehen wird. Als Klebstoff kann beispielsweise ein einkomponentiger PUR-Kaschierkleber vorgesehen sein.

Wie bereits zuvor beschrieben, können die Einprägungen zu einer verbesserten Festigkeit und auch zu einer verbesserten Klettwirkung beitragen. Dabei ist aber zu berücksichtigen, dass die eingeprägten Bereiche nicht oder nur in einem geringen Maße für die Verbindung mit Kletthaken zur Verfügung stehen.

Vor diesem Hintergrund beträgt der Flächenanteil der Einprägungen vorzugsweise zwischen 5 % und 20 %.

Die Dichte des Vliesstoffes kann beispielsweise zwischen 0,04 und 0,1 g/cm³ betragen.

Die Endlosfasern werden üblicherweise wirr abgelegt und können eine Feinheit von 0,8 bis 1,8 dtex, vorzugsweise von 1,0 bis 1,2 dtex aufweisen.

Die Stapelfasern können gekräuselt sein und beispielsweise eine Feinheit von 2,2 bis 15 dtex, vorzugsweise von 4 bis 10 dtex, aufweisen.

Grundsätzlich können auch zwei unterschiedliche Typen von Stapelfasern mit unterschiedlicher Feinheit vorgegeben sein. Insbesondere kann ein zweiter Typ mit geringerer Feinheit von beispielsweise 1,2 bis 2,1 dtex vorhanden sein. Das Verhältnis des ersten Typs zum zweiten Typ ist vorzugsweise größer als 1 : 4.

Grundsätzlich sind unterschiedliche Prägemuster geeignet. Neben punktförmigen und gitterförmigen Einprägungen kann das Vliesstoffmaterial insbesondere auch mit linienförmigen oder wellenförmigen Einprägungen versehen sein. Bei einer unterbrochenen Wellenform ergibt sich insbesondere auch ein optisch ansprechendes Erscheinungsbild, welches auch auf einen darunter liegenden Aufdruck abgestimmt sein kann.

Um insgesamt geringe Herstellungskosten zu ermöglichen, sind die Endlosfasern vorzugsweise aus Polyolefin gebildet, wobei insbesondere Polypropylen als Material für die Endlosfasern geeignet ist. Die Stapelfasern können auch aus Polyolefin, insbesondere Polypropylen (PP) gebildet sein, wobei dann auch ein sortenreines Vliesstoffmaterial bereitgestellt werden kann. Des Weiteren ist auch ein Polyester, insbesondere Polyethylenterephthalat (PET) als Polymer-material für die Stapelfasern geeignet.

Die Einprägungen werden vorzugsweise an der Seite gebildet, an der bei der Herstellung zunächst die Stapelfasern aufgelegt werden und welche bevorzugt auch für die Verbindung mit den Kletthaken vorgesehen ist.

Gegenstand der Erfindung ist auch ein Verfahren zur Herstellung des beschriebenen Verschlusselementes, wobei ein Spinnvlies durch das Extrudieren und Ablegen von Endlosfasern gebildet wird, wobei nachfolgend auf das Spinnvlies eine Schicht aus kardierten Stapelfasern derart aufgelegt wird, dass sich die Stapelfasern an einer ersten Seite des so gebildeten Vliesstoffmaterials befinden, wobei die Endlosfasern und Stapelfasern des Vliesstoffmaterials nachfolgend mit Wasserstrahlen beaufschlagt und dadurch miteinander vermischt und verschlungen werden und wobei das Vliesstoffmaterial kalt geprägt wird.

Vorzugsweise wird bei dem Herstellungsverfahren das Prägen und die Beaufschlagung durch Wasserstrahlen miteinander kombiniert, wobei das Spinnvlies sowie die Schicht aus kardierten Stapelfasern zur Prägung und zur Beaufschlagung durch Wasserstrahlen einem Walzenspalt zwischen zwei Walzen zugeführt wird, wobei zumindest eine der Walzen eine Prägestruktur sowie eine Perforation mit einer Vielzahl von Öffnungen zur Erzeugung von Wasserstrahlen aufweist. Während an Erhebungen der Prägestruktur das Vliesstoffmaterial in dem Walzenspalt festgehalten und fixiert wird, sind die übrigen Bereiche frei, so dass dort die Fasern innig miteinander vermischt und aufgebauscht werden können.

Insbesondere kann die Walze eine Perforation mit einer Vielzahl von Öffnungen zur Erzeugung der Wasserstrahlen aufweisen. Die Öffnungen der Perforation können dabei zwischen den Erhebungen der Prägestruktur angeordnet sein.

Um eine gute Verschlingung der Fasern zu erlangen, können auch mehrere Walzenpaare hintereinander angeordnet sein.

Wie bereits zuvor beschrieben, kann das Vliesstoffmaterial nach dem Kaltprägen und der Beaufschlagung mit Wasserstrahlen mittels Klebstoff auf eine zuvor mit einem Dekor bedruckte Trägerfolie aufkaschiert werden. Vorzugsweise erfolgt die Kaschierung mit der Folie an einer zweiten Seite des Vliesstoffmaterials, also gegenüberliegend der ersten Seite, an der zuvor die Schicht aus Stapelfasern auf das Spinnvlies aufgelegt wurde.

Die Erfindung wird im Folgenden anhand einer lediglich ein Ausführungsbeispiel darstellenden Zeichnung erläutert. Es zeigen:
- Fig. 1: ein schlaufenbildendes Verschlusselement für Klettverschlüsse,
- Fig. 2 und 3: die Verfahrensschritte zur Herstellung des in Fig. 1 dargestellten schlaufenbildenden Verschlusselementes,
- Fig. 4: eine Prägestruktur an der Oberfläche einer in dem Verfahren gemäß der Fig. 2 eingesetzten Walze,
- Fig. 5: ein Klebstoffmuster zur Kaschierung eines Vliesstoffmaterials mit einer Trägerfolie.

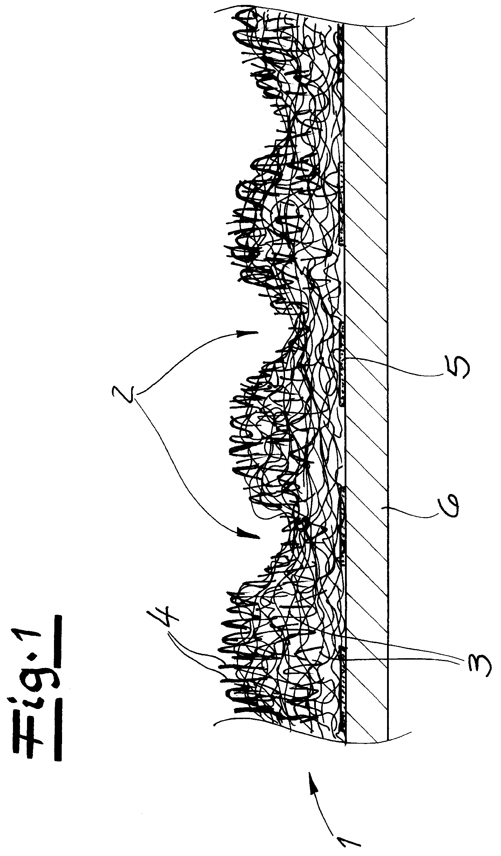

Die Fig. 1 zeigt ein schlaufenbildendes Verschlusselement, welches den weiblichen Teil eines Klettverschlusses bildet, wobei Schlaufen zur Verbindung mit Kletthaken von einem Vliesstoffmaterial 1 gebildet sind. Das Vliesstoffmaterial 1 weist an einer ersten Seite Einprägungen 2 auf und ist einerseits aus Endlosfasern 3 eines Spinnvlieses und kardierten Kurzfasern in Form von Stapelfasern 4 gebildet. Die Endlosfasern 3 und die Stapelfasern 4 sind miteinander verschlungen und bilden eine gemeinsame Vliesstoffschicht aus einem Fasergemisch. Während die Endlosfasern 3 eine gute Stabilität und Festigkeit des Vliesstoffmaterials 1 sicherstellen, wird durch die Stapelfasern 4 eine besonders weiche Oberfläche erzielt.

In der Fig. 1 ist zu erkennen, dass sich die Stapelfasern 4 über die gesamte Dicke des Vliesstoffmaterials 1 erstrecken, wobei jedoch der Anteil an Stapelfasern an der ersten mit Einprägungen 2 versehenen Seite des Vliesstoffmaterials 1 herstellungsbedingt etwas höher ist.

Das Vliesstoffmaterial 1 ist durch Klebstoff 5 mit einer einschichtigen Trägerfolie 6 kaschiert.

Zwischen den Einprägungen 2 stehen die Endlosfasern 3 sowie die Stapelfasern 4 an der ersten Seite des Vliesstoffmaterials 1 - teilweise unter Bildung von Schlaufen - vor und können so für eine Verbindung mit Kletthaken genutzt werden, wobei sowohl eine Verhakung an den Endlosfasern 3 als auch an den Stapelfasern 4 möglich ist. Gerade an den Rändern der Einprägungen 2 können Kletthaken tief in das Vliesstoffmaterial 1 eingreifen. Darüber hinaus bewirken die Einprägungen 2 eine Stabilisierung des Vliesstoffmaterials 1.

An den Einprägungen 2 sind die Endlosfasern 3 und die Stapelfasern 4 ohne ein Verschmelzen miteinander verformt. Das Flächengewicht des Vliesstoffmaterials 1 kann bevorzugt zwischen 20 g/m² und 50 g/m² liegen.

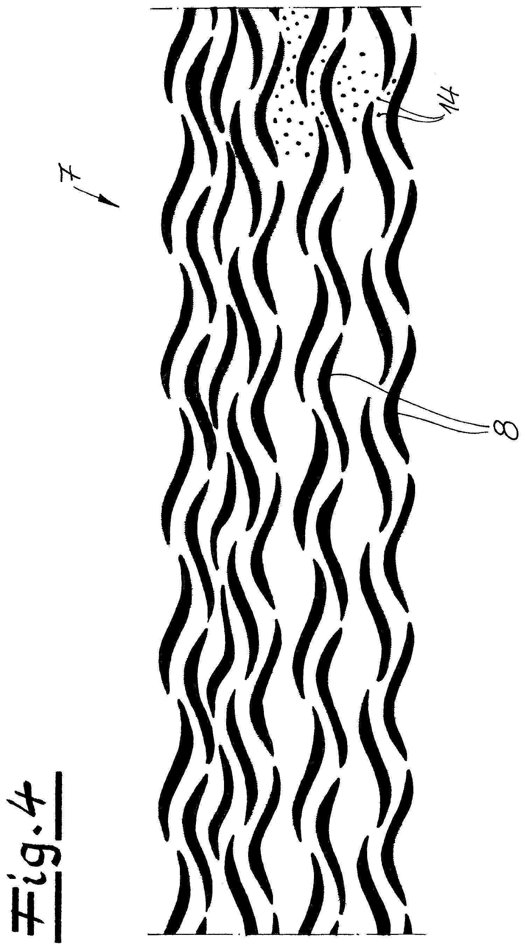

Wie nachfolgend im Detail erläutert wird, werden die Einprägungen 2 mit einer Walze 7 erzeugt. Die Oberflächenstruktur der für das Prägen vorgesehenen Walze 7 ist in der Fig. 4 dargestellt. Die dargestellte Struktur entspricht damit auch der Prägestruktur des Vliesstoffmaterials 1 in der Draufsicht. Es ist zu erkennen, dass in der Draufsicht die Einprägungen 2 in Form von wellenförmigen Abschnitten entsprechend der Erhebungen 8 der Walze geformt sind. Der Flächenanteil der Einprägungen beträgt typischerweise zwischen 5 % und 20 %.

Sowohl die Endlosfasern 3 als auch die Stapelfasern 4 können aus Polyolefin, insbesondere Polypropylen (PP) gebildet sein. Für die Stapelfasern 4 kommt des Weiteren ein Polyester, insbesondere PET als alternatives Material in Betracht.

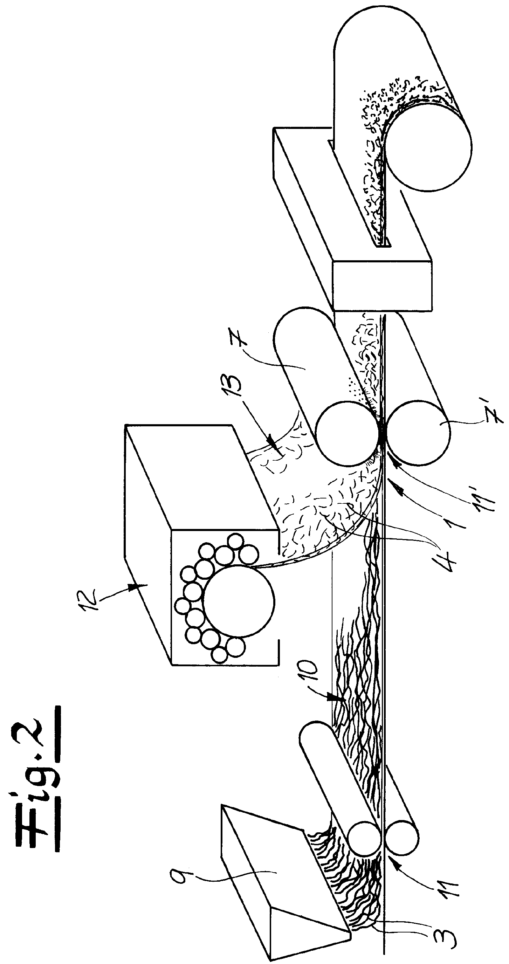

Die Fig. 2 zeigt die Schritte zur Herstellung des Vliesstoffmaterials 1, wobei zunächst aus einem Extruder 9 Endlosfasern 3 extrudiert und zur Erzeugung eines Spinnvlieses 10 abgelegt werden. Die abgelegten Endlosfasern 3 werden dabei im noch nicht vollständig ausgehärteten Zustand durch einen Walzenspalt 11 geführt und dadurch in einem geringen Maße miteinander verbunden.

Nachfolgend wird von einer Kardiervorrichtung 12 eine Schicht 13 von kardierten Stapelfasern 4 erzeugt und derart auf das Spinnvlies 10 aufgelegt, dass sich die Stapelfasern 4 an einer ersten Seite des so gebildeten Vliesstoffmaterials 1 befinden.

Danach wird das zu diesem Zeitpunkt noch zweischichtige Vliesstoffmaterial 1 einem Walzenspalt 11' zwischen zwei Walzen 7, 7' zugeführt, wobei eine der Walzen 7 die Prägestruktur gemäß der Fig. 4 sowie zwischen den Erhebungen 8 der Prägestruktur eine Perforation mit einer Vielzahl von Öffnungen 14 aufweist (Fig. 4). Der mit den Erhebungen 8 versehenen Walze 7 wird eine Flüssigkeit unter Druck zugeführt, um an den Öffnungen 14 Flüssigkeitsstrahlen zu erzeugen, die im Rahmen der Erfindung als Wasserstrahlen bezeichnet werden, selbst wenn nicht Wasser, sondern eine wässrige Flüssigkeit oder eine andere Flüssigkeit zugeführt werden. Während das Vliesstoffmaterial 1 in dem Walzenspalt 11' zwischen den Walzen 7, 7' geprägt wird, erfolgt gleichzeitig durch die Beaufschlagung mit Wasserstrahlen eine Vermischung und eine Verschlingung der Endlosfasern 3 mit den Stapelfasern 4. Es bildet sich dadurch eine Vliesstoffschicht aus einem Fasergemisch, welche über ihre Dicke Stapelfasern 4 und Endlosfasern 3 enthält, wobei an der ersten Seite des Vliesstoffmaterials 1 grundsätzlich mit einer etwas höheren Konzentration der Stapelfasern 4 zu rechnen ist, weil diese von dort ursprünglich aufgelegt wurden.

In der Fig. 2 ist des Weiteren auch angedeutet, dass das Vliesstoffmaterial 1 getrocknet und sodann aufgerollt wird.

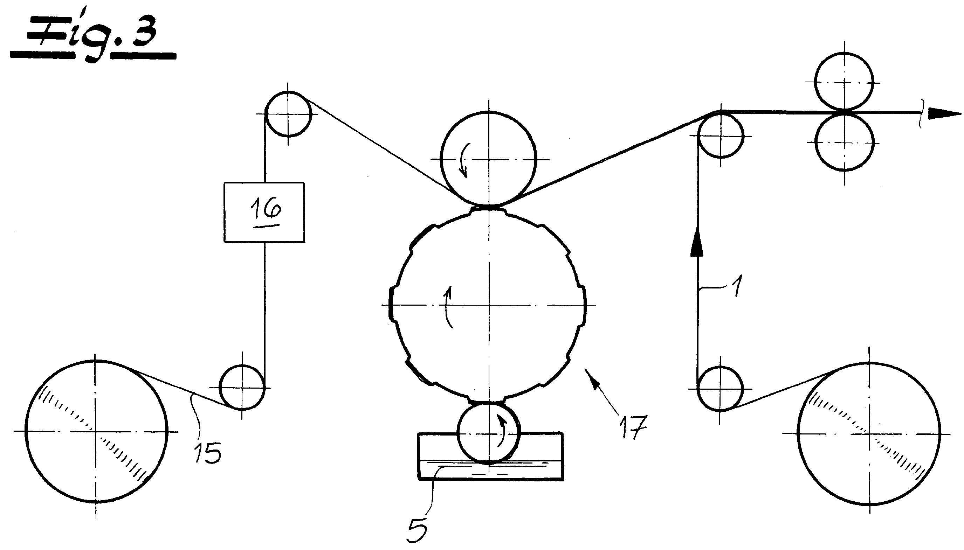

Die Fig. 3 zeigt die weitere Verarbeitung, wobei gemäß einer bevorzugten Ausgestaltung der Erfindung eine Trägerfolie 15 zugeführt und in einer Druckeinheit 16 mit einem Dekordruck versehen wird. Nachfolgend wird der Klebstoff 5 über eine Walzenanordnung 17 in einem Muster auf die Trägerfolie 15 aufgebracht, bevor die mit dem in einem Muster angeordneten Klebstoff 5 versehene Trägerfolie 15 mit dem Vliesstoffmaterial 1 kaschiert wird, so dass sich schließlich das in Fig. 1 dargestellte Material ergibt.

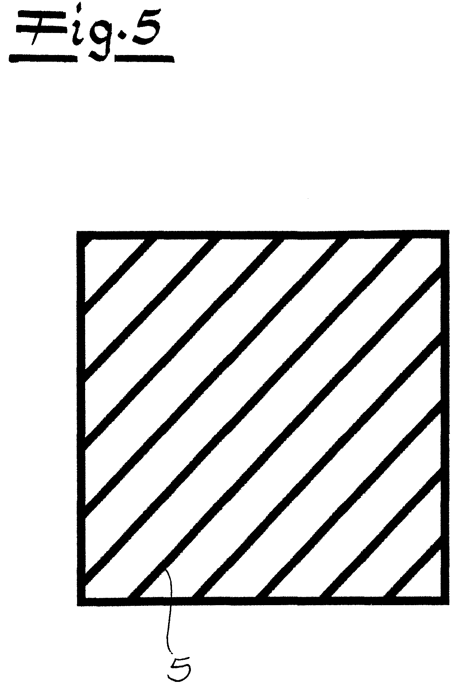

Die Fig. 5 zeigt exemplarisch ein geeignetes Klebstoffmuster zur Verbindung des Vliesstoffmaterials 1 mit der Trägerfolie 15. Der Flächenanteil an Klebstoff 5 und damit auch der Anteil der verbundenen Bereiche beträgt vorzugsweise zwischen 10 und 30 %. Die Menge an Klebstoff 5 beträgt im Mittel über die gesamte Fläche vorzugsweise zwischen 1,5 g/m² und 5 g/m². Die Breite der einzelnen mit Klebstoff versehenen Stege kann beispielsweise in dem Bereich von 1 bis 1,5 mm liegen.

### Beispiel 1:

Im Rahmen eines ersten Ausführungsbeispiels wurde eine durch Blasfolienextrusion gefertigte Monofolie aus Polyethylen mit einer Dicke von 14 µm zugeführt und auf einer ersten Seite mit einem Dekoraufdruck versehen. Sodann wurde die aus einem Gemisch von PE-LLD und PE-HD gebildete PE-Monofolie mit einem Einkomponenten-PUR-Klebstoff mit dem Klebemuster gemäß der Fig. 5 versehen und mit einem erfindungsgemäßen Vliesstoffmaterial 1 mit einem Flächengewicht von 35 g/m² versehen. Das Vliesstoffmaterial 1 ist aus Endlosfasern 3 und Stapelfasern 4 gebildet, die jeweils aus Polypropylen bestehen. Das Flächengewicht des für die Kaschierung aufgetragenen Klebstoffs beträgt 3,0 g/m².

### Beispiel 2:

Bei ansonsten gleichen Parametern wurde das Flächengewicht des Vliesstoffmaterials von 35 g/m² auf 40 g/m² erhöht.

### Vergleichsbeispiel:

Die wie zuvor beschrieben ausgestaltete Trägerfolie 15 wurde nach ihrer Bedruckung mit dem Einkomponenten-PUR-Klebstoff mit einem Flächengewicht von 1,8 g/m² mit dem in Fig. 5 dargestellten Klebstofifmuster versehen, wobei anstelle des Vliesstofifmaterials 1 ein bekanntes Gewirke aus Polyamid mit einem Flächengewicht von 18 g/m² kaschiert wurde.

**Tabelle 1**

| PEEL | Peel Fmax [N/inch] | | | | | | | | |
|---|---|---|---|---|---|---|---|---|---|
| | 3 M CHK 01088 - Haken | | | 3 M KN 2570- Haken | | | Binder 445 | | |
| | Mittelwert | Min | Max | Mittelwert | Min | Max | Mittelwert | Min | Max |
| Beispiel 1 | 1,5 | 0,9 | 2,8 | 3,5 | 1,8 | 4,9 | 7,5 | 5,3 | 11,1 |
| Beispiel 2 | 3,8 | 1,8 | 6,6 | 5,7 | 3,3 | 7,4 | 10,5 | 7,4 | 13,4 |
| Vergleichsbeispiel | 2,8 | 2,1 | 4,9 | 2,5 | 2,0 | 3,7 | 6,3 | 3,3 | 10,0 |

**Tabelle 2**

| SHEAR | Shear Fmax [N/inch] | | | | | | | | |
|---|---|---|---|---|---|---|---|---|---|
| | 3 M CHK 01088 - Haken | | | 3 M KN 2570- Haken | | | Binder 445 | | |
| | Mittelwert | Min | Max | Mittelwert | Min | Max | Mittelwert | Min | Max |
| Beispiel 1 | 41,6 | 26,7 | 51,5 | 40,0 | 31,1 | 53,2 | 32,9 | 12,4 | 41,9 |
| Beispiel 2 | 39,5 | 21,6 | 62,5 | 45,0 | 33,0 | 50,4 | 39,3 | 24,2 | 61,8 |
| Vergleichsbeispiel | 58,8 | 51,6 | 67,7 | 29,1 | 19,8 | 44,4 | 39,1 | 30,9 | 52,9 |

Die Tabellen 1 und 2 zeigen die Ergebnisse einer Peel-Messung sowie einer Shear-Messung. Zur Vorbereitung der Proben wird ein Streifen des Vliesstoffmaterials bezogen auf das in den Fig. 2 und 3 dargestellte Herstellungsverfahren in einer Querrichtung mit einer Breite von einem inch 25,4 (mm) zurecht geschnitten. Um eine definierte Verbindung mit den Haken erreichen zu können, wird die Probe sodann in eine Hängevorrichtung eingehängt, wobei nachfolgend mit einem Gewicht von 500 g beschwertes Hakenband per Hand für eine Dauer von 3 Sek. an das Vliesstoffmaterial angedrückt wird und nachfolgend unter Gewichtsbelastung für 5 Sek. an dem Vliesstoffmaterial 1 hängt, bevor das Gewicht entfernt wird.

Die weitere Prüfung erfolgt dann mit den Standardeinstellungen eines Zwick-Gerätes, wobei dass Vliesstoffmaterial 1 in die untere und das Hakenband in die obere Spannbacke eingesetzt wird. Bei der Messung der Scherkraft (Shear-Messung) sind das Hakenband und das Vliesstoffmaterial 1 flach in einer Ebene angeordnet. Bei einer Messung der Schälkräfte (Peel-Messung) wird das Vliesstoffmaterial 1 so eingespannt, dass es ausgehend von dem Hakenband um 180° auf sich selbst umgefaltet ist. Bei dem Zugversuch wird dann ein Abschälen um 180° nachempfunden.

Bei einer Variation der Versuchsparameter zeigt sich, dass im relativen Vergleich der verschiedenen Materialien zueinander die spezifischen Eigenschaften in gleicher Weise bestimmbar sind. Die konkret ausgewählte Versuchsdurchführung ist deshalb nur exemplarisch und dient zum Zwecke der Erläuterung.

Die Messungen zeigen, dass mit verschiedenen Flächengewichten des erfindungsgemäßen Vliesstoffmaterials 1 die Peel- und Shear-Werte eines bekannten texturierten Polyamid-Gewirkes erreicht oder sogar übertroffen werden können, wobei sich das erfindungsgemäße Verschlusselement durch eine sehr weiche, gleichmäßige und optisch ansprechende Oberfläche auszeichnet.

## Patentansprüche

1. Schlaufenbildendes Verschlusselement für Klettverschlüsse, umfassend ein Vliesstoffmaterial (1) mit Endlosfaser (3) eines Spinnvlieses und kardierten Stapelfasern (4), wobei die Endlosfasern (3) und Stapelfasern (4) miteinander verschlungen sind und gemeinsam eine Vliesstoffschicht aus einem Fasergemisch bilden und wobei sich der Anteil der Endlosfasern (3) zu dem Anteil der Stapelfasern (4) über die Dicke der Vliesstoffschicht ändert, **dadurch gekennzeichnet, dass** das Vliesstoffmaterial geprägt ist und dass an beiden Seiten der Vliesstoffschicht Stapelfasern (4) vorstehen.

2. Verschlusselement nach Anspruch 1, **dadurch gekennzeichnet, dass** das geprägte Vliesstoffmaterial (1) vollständig aus den Endlosfasern (3) und den Stapelfasern (4) besteht.

3. Verschlusselement nach Anspruch 1 oder 2, **dadurch gekennzeichnet, dass** das Vliesstoffmaterial (1) ein Flächengewicht zwischen 20 g/m² und 50 g/m² aufweist.

4. Verschlusselement nach einem der Ansprüche 1 bis 3, **dadurch gekennzeichnet, dass** das Vliesstoffmaterial (1) mit einer Trägerfolie (15) kaschiert ist.

5. Verschlusselement nach Anspruch 4, **dadurch gekennzeichnet, dass** das Vliesstoffmaterial (1) und die Trägerfolie (15) mit einem in einem Muster aufgetragenen Klebstoff (5) kaschiert sind.

6. Verschlusselement nach einem der Ansprüche 1 bis 5, **dadurch gekennzeichnet, dass** das Vliesstoffmaterial (1) linienförmige oder wellenförmige Einprägungen aufweist.

7. Verschlusselement nach einem der Ansprüche 1 bis 6, **dadurch gekennzeichnet, dass** die Endlosfasern (3) aus Polyolefin, insbesondere Polypropylen gebildet sind.

8. Verschlusselement nach einem der Ansprüche 1 bis 7, **dadurch gekennzeichnet, dass** die Stapelfasern (4) aus einem Polyolefin oder einem Polyester gebildet sind.

9. Verfahren zur Herstellung eines Verschlusselementes nach einem der Ansprüche 1 bis 8, wobei ein Spinnvlies (10) durch das Extrudieren und Ablegen von Endlosfasern (3) gebildet wird,
wobei nachfolgend auf das Spinnvlies (10) eine Schicht (13) von kardierten Stapelfasern (4) derart aufgelegt wird, dass sich die Stapelfasern (4) an einer ersten Seite des so gebildeten Vliesstoffmaterials (1) befinden,
wobei das Spinnvlies (10) sowie die Schicht (13) aus kardierten Stapelfasern (4) zur Prägung und Beaufschlagung durch Wasserstrahlen einem Walzenspalt (11') zwischen zwei Walzen (7, 7') zugeführt wird,
wobei zumindest eine der Walzen (7) eine Prägestruktur mit Erhebungen (8) sowie eine Perforation mit einer Vielzahl von Öffnungen (14) zur Erzeugung der Wasserstrahlen zwischen den Erhebungen (8) aufweist,
wobei die Endlosfasern (3) und die Stapelfasern (4) des Vliesstoffmaterials (1) mit Flüssigkeitsstrahlen beaufschlagt und dadurch miteinander vermischt und verschlungen werden,
wobei das Vliesstoffmaterial kalt geprägt wird.

10. Verfahren nach Anspruch 9, wobei nach dem Kaltprägen und der Beaufschlagung mit Wasserstrahlen das Vliesstoffmaterial (1) mittels Klebstoff (5) auf eine zuvor mit einem Dekor bedruckte Trägerfolie (15) aufkaschiert wird.

11. Verfahren nach Anspruch 10, wobei das Vliesstoffmaterial (1) an einer zweiten Seite auf die Trägerfolie (15) kaschiert wird.

## Claims

1. A loop-forming fastener element for hook-and-loop fasteners, comprising a nonwoven fabric material (1) with continuous fibres (3) of a spunbonded fabric, and carded staple fibres (4), wherein the continuous fibres (3) and staple fibres (4) are entangled with one another, and together form a nonwoven fabric layer of a fibre mixture, and wherein the proportion of the continuous fibres (3) relative to the proportion of the staple fibres (4) varies over the thickness of the nonwoven fabric layer, **characterised in that** the nonwoven fabric material is embossed, and **in that** staple fibres (4) protrude from both sides of the nonwoven fabric layer.

2. The fastener element in accordance with claim 1, **characterised in that** the embossed nonwoven fabric material (1) consists entirely of the continuous fibres (3) and the staple fibres (4).

3. The fastener element in accordance with claim 1 or 2, **characterised in that** the nonwoven fabric material (1) has a mass per unit surface area of between 20 g/m² and 50 g/m².

4. The fastener element in accordance with one of the claims 1 to 3, **characterised in that** the nonwoven fabric material (1) is laminated together with a carrier film (15).

5. The fastener element in accordance with claim 4, **characterised in that** the nonwoven fabric material (1) and the carrier film (15) are laminated together with an adhesive (5) applied in a pattern.

6. The fastener element in accordance with one of the claims 1 to 5, **characterised in that** the nonwoven fabric material (1) has linear-shaped, or wave-shaped embossed areas.

7. The fastener element in accordance with one of the claims 1 to 6, **characterised in that** the continuous fibres (3) are formed from a polyolefin, in particular polypropylene.

8. The fastener element in accordance with one of the claims 1 to 7, **characterised in that** the staple fibres (4) are formed from a polyolefin, or a polyester.

9. A method for the manufacture of a fastener element in accordance with one of the claims 1 to 8, wherein a spunbonded fabric (10) is formed by the extrusion and laying down of continuous fibres (3), wherein
a layer (13) of carded staple fibres (4) is subsequently laid down onto the spunbonded fabric (10) such that the staple fibres (4) are located on a first side of the nonwoven fabric material (1) thus formed, wherein
the spunbonded fabric (10), together with the layer (13) of carded staple fibres (4), is supplied to a roller gap (11') between two rollers (7, 7') for purposes of embossing and impingement by water jets, wherein
at least one of the rollers (7) has an embossing structure with elevations (8), together with a perforation with a number of openings (14) for purposes of generating the water jets between the elevations (8), wherein
the continuous fibres (3) and the staple fibres (4) of
the nonwoven fabric material (1) are impinged upon with fluid jets, and by this means are mixed and entangled with one another, wherein
the nonwoven fabric material is cold embossed.

10. The method in accordance with claim 9, wherein after
the cold embossing and impingement with water jets the nonwoven fabric material (1) is laminated by means of adhesive (5) onto a carrier film (15) previously printed with a decoration.

11. The method in accordance with claim 10, wherein the nonwoven fabric material (1) is laminated onto the carrier film (15) on a second side.

## Revendications

1. Élément de fermeture formant une boucle pour des fermetures velcro, comprenant un matériau non-tissé (1) avec des fibres continues (3) d'un filé-lié et des fibres discontinues (4) cardées, les fibres continues (3) et les fibres discontinues (4) étant enlacées les unes avec les autres et formant conjointement une couche de non-tissé constituée d'un mélange de fibres, et dans lequel la part de fibres continues (3) par rapport à la part de fibres discontinues (4) varie sur l'épaisseur de la couche de non-tissé, **caractérisé en ce que** le matériau non-tissé est estampé et **en ce que** des fibres discontinues (4) dépassent des deux côtés de la couche de non-tissé.

2. Élément de fermeture selon la revendication 1, **caractérisé en ce que** le matériau non-tissé (1) estampé est entièrement constitué des fibres continues (3) et des fibres discontinues (4).

3. Élément de fermeture selon la revendication 1 ou 2, **caractérisé en ce que** le matériau non-tissé (1) présente un poids surfacique compris entre 20 g/m² et 50 g/m².

4. Élément de fermeture selon l'une des revendications 1 à 3, **caractérisé en ce que** le matériau non-tissé (1) est stratifié avec une feuille de support (15).

5. Élément de fermeture selon la revendication 4, **caractérisé en ce que** le matériau non-tissé (1) et la feuille de support (15) sont stratifiés avec une colle (5) appliquée suivant un motif.

6. Élément de fermeture selon l'une des revendications 1 à 5, **caractérisé en ce que** le matériau non-tissé (1) présente des estampages linéaires ou ondulés.

7. Élément de fermeture selon l'une des revendications 1 à 6, **caractérisé en ce que** les fibres continues (3) sont constituées d'une polyoléfine, en particulier de polypropylène.

8. Élément de fermeture selon l'une des revendications 1 à 7, **caractérisé en ce que** les fibres discontinues (4) sont constituées d'une polyoléfine ou d'un polyester.

9. Procédé pour la fabrication d'un Élément de fermeture selon l'une des revendications 1 à 8, dans lequel un filé-lié (10) est formé par l'extrusion ou le dépôt de fibres continues (3),
dans lequel une couche (13) de fibres discontinues cardées (4) est ensuite disposée de telle façon sur le filé-lié (10) que les fibres discontinues (4) se trouvent sur un premier côté du matériau non-tissé (1) ainsi formé,
dans lequel le filé-lié (10) ainsi que la couche (13) de fibres discontinues cardées (4) sont guidés vers une emprise de rouleaux (11') entre deux rouleaux (7, 7'), pour l'estampage et la sollicitation par jets d'eau,
dans lequel au moins l'un des cylindres (7) présente une structure estampée avec des bossages (8) ainsi qu'une perforation avec une multitude d'orifices (14) destinés à produire les jets d'eau entre les bossages (8),
dans lequel les fibres continues (3) et les fibres discontinues (4) du matériau non-tissé (1) sont sollicitées par jets de liquide et ainsi mélangées ensemble et entrelacées,
dans lequel le matériau non-tissé est estampé à froid.

10. Procédé selon la revendication 9, dans lequel le matériau non-tissé (1) est stratifié sur une couche de support (15) préalablement imprimée avec une décoration, à l'aide d'une colle (5), après l'estampage à froid et la sollicitation par jets d'eau.

11. Procédé selon la revendication 10, dans lequel le matériau non-tissé (1) est stratifié par un deuxième côté sur la couche de support (15).
